Europäisches Patentamt

European Patent Office

Office européen des brevets

(11) Veröffentlichungsnummer: **0 016 913**
**A1**

# (12) EUROPÄISCHE PATENTANMELDUNG

(21) Anmeldenummer: 80100367.4

(22) Anmeldetag: 24.01.80

(51) Int. Cl.³: **F 16 M 11/14**

(30) Priorität: 04.04.79 DE 7909786 U

(43) Veröffentlichungstag der Anmeldung: 15.10.80
Patentblatt 80/21

(84) Benannte Vertragsstaaten: **CH DE FR IT SE**

(71) Anmelder: **Nixdorf Computer Aktiengesellschaft,
Fürstenallee 7, D-4790 Paderborn (DE)**

(72) Erfinder: **Schmeykal, Rudolf, Bekscher Berg 17,
D-4791 Neuenbeken (DE)**
Erfinder: **Döinghaus, Hermann, Friedhofsweg 30,
D-4791 Delbrück-Hagen (DE)**
Erfinder: **Werner, Franz, Sternberg 38,
D-4790 Paderborn-Wewer (DE)**

(74) Vertreter: **Hanewinkel, Lorenz, Nixdorf Computer AG
Pontanusstrasse 55, D-4790 Paderborn (DE)**

(54) Schwenkauflager für Geräte.

(57) Ein Schwenkauflager für Geräte, vorzugsweise für Bildschirmgeräte, ermöglicht die variable Neigung und Drehung um eine kugelförmige konvexe Auflagerfläche (12) in einem Fußteil (6) des Gerätes, auf dessen Auflagerfläche (12) sich eine an der Unterseite des Gerätes befindliche konkave Lagerpfanne (20) mit Reibungshaftung abstützt und das mit einem Führungssteg (21) in einer Führungsnut in der Auflagerfläche (12) geführt ist. Das Auflagerelement besitzt eine zentrale von der Auflagerfläche aus sich verengende Öffnung (17), in welcher ein zwischen Lagerpfanne (20) und Gleitfläche (18) verspannbarer Spannstift (22) verstellbar geführt ist. Durch Federelemente (25) in der Spanneinrichtung kann die Reibungskraft der Auflagerfläche exakt eingestellt werden.

## Schwenkauflager für Geräte

Die Neuerung bezieht sich auf ein Schwenkauflager für Geräte, vorzugsweise für Bildschirmgeräte, das zusammen mit dem Gerät gegenüber der Aufstellfläche in variabler Neigung und Drehung verstellbar ist.

Bei derartigen bekannten Schwenkauflagern besteht der Nachteil, daß sie für die Verstellung des in unterschiedliche Schwenkpositionen zu verstellenden Gerätes, d.h. für die Verdrehung um eine vertikale Achse sowie für die Verschwenkung in unterschiedliche Neigungs-Winkellagen viele konstruktiv und kostenmäßig aufwendige Schwenk-Lagerelemente und Arretierelemente für die Feststellung in der jeweiligen Schwenkstellung erforderlich machen.

Der vorliegenden Neuerung liegt die Aufgabe zugrunde, ein Schwenkauflager der eingangs genannten Art so auszugestalten, daß mit sehr einfachen, wenigen, raum- und kostensparenden sowie wartungsfreien Lagerelementen eine stufenlose Verstellung des Geräts möglich ist, wobei zur Arretierung in den verschiedenen Schwenkstellungen keine Manipulation an besonderen Arretiervorrichtungen erforderlich sein soll.

Diese Aufgabe wird gemäß der Neuerung dadurch gelöst, daß ein eine konvexe, kugelförmige Auflagerfläche aufweisendes, in einem Fußteil um eine vertikale Achse drehbar gelagertes Auflagerelement vorgesehen ist, auf dessen Auflagerfläche sich eine mit dem Gerät verbundene konkave Lagerpfanne mit Reibungshaftung abstützt und mit einem Führungssteg in einer Führungsnut in der Auflagerfläche geführt ist.

0016913

Durch das funktionelle Zusammenwirken von kugelförmiger bzw. kugelsegmentförmiger Auflagerfläche des Auflagerelementes und der fest mit
der Gerätestütze bzw. mit dem Geräterahmen selbst verbundenen konkaven Lagerpfanne, die sich großflächig auf der kugelförmigen Auflagerfläche abstützt, ergibt sich eine maximale Reibungsfläche zwischen den
relativ gegeneinander stufenlos bewegbaren Teilen, so daß sich schon
damit bei ausreichender Reibungsbeschaffenheit der Oberfläche eine besondere Arretierung der beiden genannten Teile in unterschiedlichen
Schwenkstellungen erübrigen kann. Durch die Drehbarkeit des die kugelförmige Auflagerfläche aufweisenden Auflagerelementes wird es möglich,
die Schwenkbarkeit der Lagerpfanne und damit des Gerätes auf zwei
einander entgegengesetzte Schwenkrichtungen zu begrenzen, wodurch eine
exakte Führung der Lagerpfanne auf der Auflagerfläche des Auflagerelementes und ein seitliches Abkippen des Gerätes bei zu extremer
Schwenklage der Lagerpfanne verhindert wird. Für diese Führung ist
neuerungsgemäß in der Auflagerfläche eine Führungsnut eingearbeitet,
in welcher der mit der Lagerpfanne verbundene Führungssteg geführt ist.
Selbstverständlich besteht auch die Möglichkeit, umgekehrt die Führungsnut in der Lagerpfanne und den Führungssteg auf der Auflagerfläche vorzusehen. Eine zu extreme Schwenkstellung in Längsrichtung der Führungsnut und somit ein unbeabsichtigtes Abkippen wird gemäß einer weiteren
Ausgestaltung der Erfindung dadurch verhindert, daß die der Kugelform
der Auflagerfläche folgende Nut beidenends durch Anschlagkanten für den
gegenüber der Nutlänge entsprechend dem maximalen Neigungswinkel
kürzeren Steg begrenzt ist.

Eine sehr einfache, unproblematische Konstruktion ergibt sich dadurch,
daß das Auflagerelement pilzförmig ausgestaltet ist und sich mit der
Unterseite des pilzförmigen, die Auflagerfläche aufweisenden Kopfes auf
der ringförmigen Begrenzungskante einer Lageröffnung im Fußteil abstützt.

Gemäß einer weiteren vorteilhaften Ausgestaltung der Neuerung weist das Auflagerelement eine zentrale, von der Auflagerfläche aus sich verengende, durch eine kugelsegmentförmige Gleitfläche begrenzte Öffnung auf, in welcher ein zwischen Lagerpfanne und Gleitfläche verspannbarer Spannstift im Neigungswinkel verstellbar geführt ist. Dabei ist es vorteilhaft, wenn der Spannstift als Schraube ausgebildet ist, die sich an einer Widerlagerfläche der mit einer Durchführungsöffnung versehenen Lagerpfanne mit dem Schraubenkopf einerseits und mit einem Federelement, vorzugsweise mit Tellerfedern und einer Mutter, andererseits an der Gleitfläche abstützt. Durch diesen Spannstift kann die Reibungskraft zwischen Auflagerfläche und Lagerpfanne exakt eingestellt werden und braucht nicht mehr verändert werden. Vielmehr ist durch das Vorhandensein des Federelementes eine Selbstregulierung, auch bei entsprechender Abnützung auf den Reibungs- bzw. Widerlagerflächen gewährleistet. Auf diese Weise ist das neuerungsgemäße Schwenkauflager völlig wartungsfrei und bedarf keinerlei Nachjustierung, wobei durch die satte, großflächige Auflage der Lagerpfanne auf der Auflagerfläche sich in jeder Schwenkstellung eine ausreichende Selbsthemmung bzw. Selbstarretierung ergibt und die Verstellung in alle Schwenkpositionen völlig spiel- und schwingungsfrei erfolgen kann.

Die Neuerung ist anhand eines in der Zeichnung dargestellten Ausführungsbeispiels nachstehend erläutert. Es zeigt:

Fig. 1    Die Seitenansicht eines auf dem neuerungsgemäßen Schwenkauflager ruhenden Bildschirmgerätes in waagerechter und zurückgeneigter Stellung,

Fig. 2    eine vergrößerte Schnittdarstellung des neuerungsgemäßen Schwenkauflagers,

Fig. 3        das Schwenkauflager gemäß Fig. 2 in veränderter Schwenkposition,

Fig. 4, 5, 6 das Auflagerelement des Schwenkauflagers gemäß den vorhergehenden Figuren als vergrößerte Einzelheit in Draufsicht und zwei Schnittansichten.

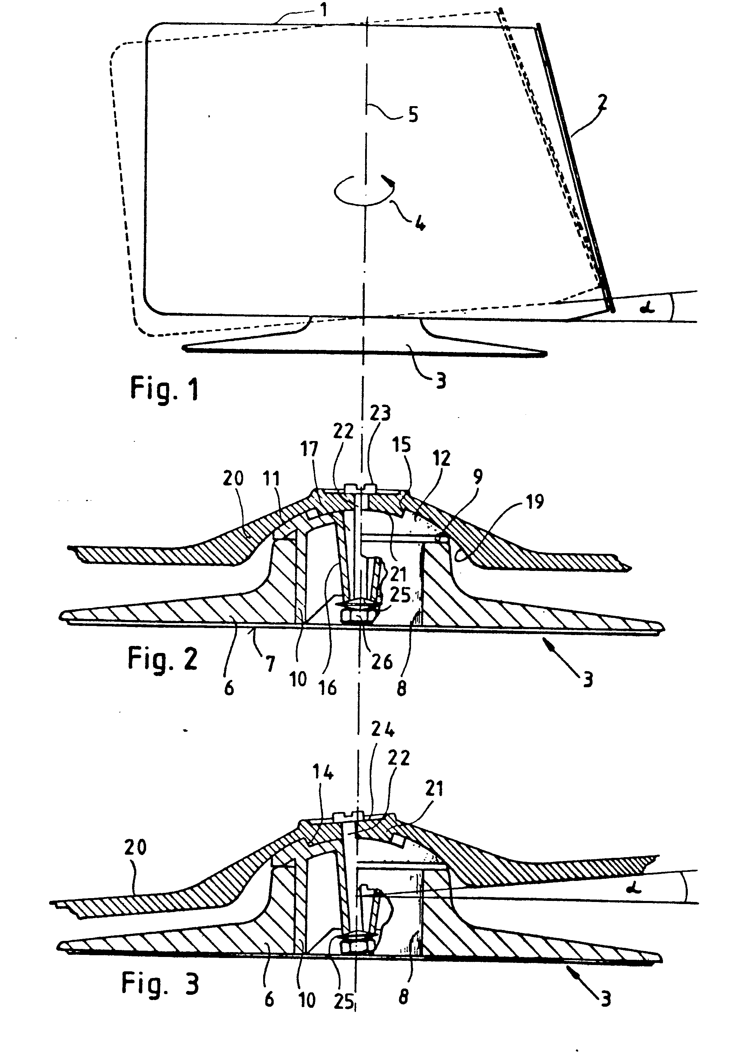

In Fig. 1 ist mit 1 ein Bildschirmgerät mit einer Sichtfläche 2 bezeichnet, das auf einem allgemein mit 3 bezeichneten Schwenkauflager ruht, das sich wiederum auf einer nicht weiter dargestellten Aufstellfläche, z.B. auf einer Tischfläche, abstützt. Wie durch gestrichelte Linienzüge angedeutet, kann das Bildschirmgerät 1 aus einer waagerechten Stellung in eine nach hinten geneigte Schwenkstellung um den Winkel $\alpha$ verstellt werden. Ebenso kann das Bildschirmgerät 1 auch in der entgegengesetzten Richtung um einen entsprechenden Schwenkwinkel verstellt werden. Wie durch den Pfeil 4 angedeutet, kann das Bildschirmgerät 1 auch um eine vertikale Mittelachse 5 in jede beliebige Schwenkposition gedreht werden.

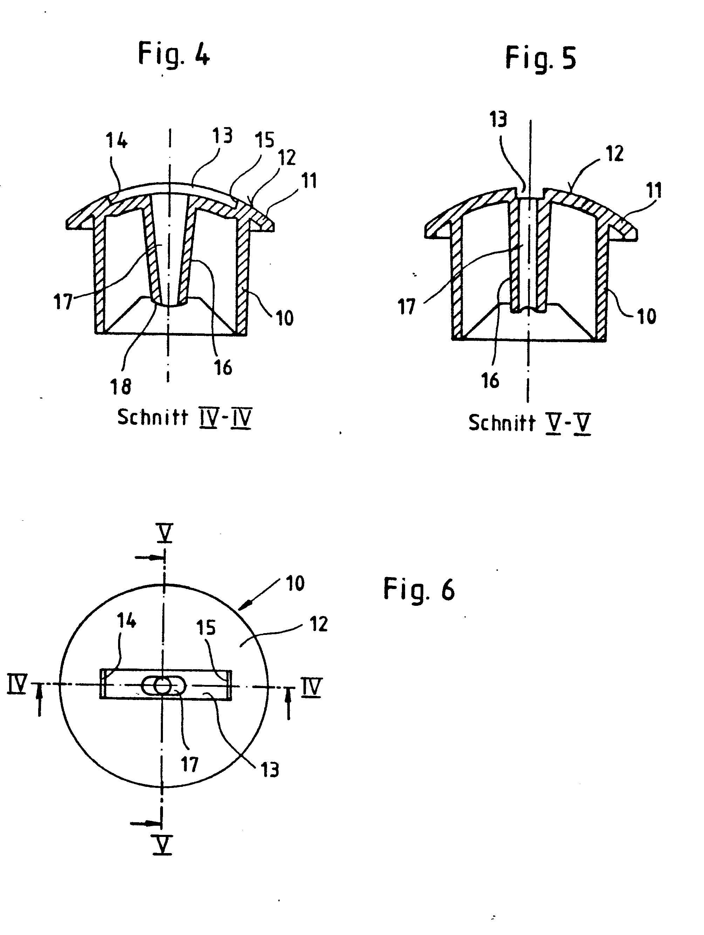

Das in Fig. 1 allgemein mit 3 bezeichnete Schwenkauflager ist in den Fig. 2 und 3 detailliert dargestellt. Es besitzt einen relativ weit ausgreifenden und in der Mitte verjüngten Fußteil 6 mit einer Aufstellfläche 7, welcher Fußteil eine zentrale Lageröffnung 8 sowie eine ringförmige Begrenzungskante 9 aufweist. In der Lageröffnung 8 frei drehbar gelagert ist ein pilzförmig ausgestaltetes Auflagerelement 10, das als Einzelheit in den Fig. 4 bis 6 dargestellt ist. Das Auflagerelement besitzt einen pilzhutförmigen Kopf 11 mit dessen Unterseite es sich auf der ringförmigen Begrenzungskante 9 des Fußteils 6 abstützt. Der pilzhutförmige Kopf 11 besitzt eine konvexe, kugelförmige Auflagerfläche 12

vorbestimmter Reibungsrauhe, die lediglich durch eine der Kugelform der Auflagerfläche 12 folgende Führungsnut 13 unterbrochen ist. Die Führungsnut 13 besitzt beidenends Anschlagkanten 14 und 15. Unterhalb des pilzhutförmigen Kopfes 11 ist ein konisch zulaufender Ansatz 16 vorgesehen, der eine nach unten hin verengte Öffnung 17 aufweist, die einerseits in die Führungsnut 13 einmündet und andererseits durch eine kugelsegmentförmige Gleitfläche 18 am freien Ende des Ansatzes 16 begrenzt ist. Wie die Fig. 4 bis 6 zeigen, besitzt die Öffnung 17 im Bereich der Nut einen langlochförmigen Querschnitt, der am Ende des Ansatzes 16 in einen kreisrunden Querschnitt kontinuierlich übergeht.

Wie die Fig. 2 und 3 zeigen, ruht auf der kugelförmigen Auflagerfläche 12 satt eine mit einer entsprechenden konkaven Lagerfläche 19 versehene Lagerpfanne 20, die unmittelbar mit dem zu halternden Bildschirmgerät 1 verbunden sein kann. Im Bereich der Lagerfläche 19 besitzt diese Lagerpfanne 20 einstückig einen Führungssteg 21, der in die Führungsnut 13 paßt und darin gleiten kann. Der Führungssteg 21 ist entsprechend dem maximalen Neigungswinkel kürzer als die Nutlänge. In Fig. 2 befindet sich die Lagerpfanne und damit das Bildschirmgerät 1 in der waagerechten Stellung, in welcher die eine Begrenzungskante des Führungssteges 21 an der Anschlagkante 15 der Führungsnut 13 anschlägt. In Fig. 3 ist die Lagerpfanne 20 um den Winkel $\alpha$ verstellt, wobei die andere Begrenzungskante des Führungssteges 21 an der anderen Anschlagkante 14 der Führungsnut 13 anschlägt, wodurch auch der Schwenkbereich begrenzt wird. In den Fig. 2 und 3 ist ein Spannstift in Form einer Schraube 22 gezeigt, deren Schraubenkopf 23 an einer Widerlagerfläche 24 der Lagerpfanne 20 anliegt, wobei der Schraubenschaft durch eine Durchführungsöffnung in der Lagerpfanne 20 und durch die Öffnung 17 im Auflagerelement 10 hindurchragt und die Gleitfläche 18 überragt. Die Schraube 22 stützt sich andererseits durch eine Mutter 26 und über zwei gegeneinander gestellte Tellerfedern 25 auf der kugelförmigen Gleitfläche 18 federnd ab. Durch den langlochartigen Querschnitt der Öffnung 17 kann die Schraube 22 innerhalb der Öffnung 17 entsprechend dem gewünschten Neigungswinkel verstellt werden, wie Fig. 2 und 3 zeigen. Durch die Spannung der vorgenannten Tellerfedern 25 kann der Reibwert zwischen Auflagerfläche 12 und Lagerpfanne 20 exakt eingestellt werden. Diese Tellerfedern können auch die Lockerung der Verbindung ausgleichen, die bei häufiger Betätigung des Schwenkauflagers entsteht. Die in den Figuren obere Tellerfeder dient dabei als Gleitfläche, die sich auf der Gleitfläche 18 des Ansatzes 16 federnd abstützt. Es wurde schon erwähnt, daß durch die drehbare Lagerung des Auflagerelementes 10 das Bildschirmgerät 1 in jede beliebige Drehstellung verstellt werden kann. Selbstverständlich besteht auch die Möglichkeit, für die Begrenzung der Drehbewegung entsprechende Anschläge vorzusehen, die in den Figuren nicht dargestellt sind. Als Material für das erfindungsgemäße Schwenkauflager kann Metall oder Kunststoff oder aber eine Kombination aus Kunststoff und Metall verwendet werden.

- 1 -

Patentansprüche:

1. Schwenkauflager für Geräte, vorzugsweise für Bildschirmgeräte, das zusammen mit dem Gerät gegenüber der Aufstellfläche in variabler Neigung und Drehung verstellbar ist, dadurch gekennzeichnet, daß ein eine konvexe, kugelförmige Auflagerfläche (12) aufweisendes, in einem Fußteil (6) um eine vertikale Achse (5) drehbar gelagertes Auflagerelement (10) vorgesehen ist, auf dessen Auflagerfläche sich eine mit dem Gerät (1) verbundene konkave Lagerpfanne (20) mit Reibungshaftung abstützt und mit einem Führungssteg (21) in einer Führungsnut (13) in der Auflagerfläche (12) geführt ist.

2. Schwenkauflager nach Anspruch 1, dadurch gekennzeichnet, daß die der Kugelform der Auflagerfläche (12) folgende Führungsnut (13) beidenends durch Anschlagkanten (14, 15) für den gegenüber der Nutlänge entsprechend dem maximalen Neigungswinkel ($\alpha$) kürzeren Führungssteg (21) begrenzt ist.

3. Schwenkauflager nach Anspruch 1 und/oder 2, dadurch gekennzeichnet, daß das Auflagerelement (10) pilzförmig ausgestaltet ist und sich mit der Unterseite des pilzförmigen, die Auflagerfläche (12) aufweisenden Kopfes (11) auf der ringförmigen Begrenzungskante (9) einer Lageröffnung (8) im Fußteil (6) abstützt.

4. Schwenkauflager nach Anspruch 3, dadurch gekennzeichnet, daß das Auflagerelement (10) eine zentrale, von der Auflagerfläche (12) aus sich verengende, durch eine kugelsegmentförmige Gleitfläche (18) begrenzte Öffnung (17) aufweist, in welcher ein zwischen Lagerpfanne (20) und der Gleitfläche (18) verspannbarer Spannstift (Schraube 22) im Neigungswinkel verstellbar geführt ist.

5. Schwenkauflager nach Anspruch 4, dadurch gekennzeichnet, daß die vorzugsweise innerhalb eines von der Auflagerfläche (12) abstehenden Ansatzes (16) angeordnete Öffnung (17) einen langlochförmigen Querschnitt aufweist, der am Ende des Ansatzes in einen kreisrunden Querschnitt kontinuierlich übergeht.

6. Schwenkauflager nach den Ansprüchen 4 und 5, dadurch gekennzeichnet, daß der Spannstift als Schraube (22) ausgebildet ist, die sich an einer Widerlagerfläche (24) der mit einer Durchführungsöffnung versehenen Lagerpfanne (20) mit dem Schraubenkopf (23) einerseits und mit einem Federelement, vorzugsweise mit Tellerfedern (25) und einer Mutter (26), andererseits an der Gleitfläche (18) abstützt.

0016913

Fig. 1

Fig. 2

Fig. 3

0016913

## Fig. 4

## Fig. 5

Schnitt IV-IV

Schnitt V-V

## Fig. 6

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 558 759 (ERTEL-WERK)<br>* Seite 4, Zeilen 2-16; Seite 5, Zeilen 1-24; Figuren 1,2 *<br><br>-- | 1,2,6 |
| | GB - A - 118 170 (WATTS)<br>* Seite 3, Zeilen 17-34; Figuren 3,4 *<br><br>-- | 1,2 |
| | CH - A - 288 776 (KERN)<br>* Seite 1, Zeile 56 - Seite 2, Zeile 40; Figuren *<br><br>-- | 1,4 |
| | DE - C - 350 396 (WEIDNER)<br>* Seite 2, Zeilen 27-77; Figuren 1,2 *<br><br>-- | 1 |
| | US - A - 2 449 049 (BLACK)<br>* Spalte 2, Zeilen 37-46; Figuren 2-4 *<br><br>-- | 4,5 |
| A | US - A - 1 883 796 (KING)<br><br>---- | |

**KLASSIFIKATION DER ANMELDUNG (Int.Cl. 3)**

F 16 M 11/14 √

**RECHERCHIERTE SACHGEBIETE (Int. Cl. 3)**

F 16 M
G 12 B
G 03 B
A 47 B
F 16 C

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort: Den Haag | Abschlußdatum der Recherche 04-06-1980 | Prüfer NADELHOFFER |
|---|---|---|

EPA form 1503.1 06.78